# EUROPEAN PATENT APPLICATION

(11) **EP 3 587 807 A1**
(43) Date of publication of application: **01.01.2020**
(21) Application number: 18179612.9
(22) Date of filing: 25.06.2018
(51) Int. Cl.: F03D 80/50

(54) **INFLATABLE COMPONENT FOR SERVICE OR INSTALLATION OF A WIND TURBINE MODULE**

(71) Applicant: Siemens Gamesa Renewable Energy A/S, 7330 Brande (DK)
(72) Inventor: Andersen, Erik Dahl, 7480 Vildbjerg (DK)
(74) Representative: Aspacher, Karl-Georg

(57) **Abstract**

The invention is directed to an inflatable component (10) usable during service and/or installation of a wind turbine module (1), comprising an inflation structure (11) with an air tight shell (12) and a sealable passage (13) in the inflation structure (11) for ingress or discharge of air into or from the air tight shell (11) for inflating or deflating the inflation structure (11). The inflation structure (11) is dimensioned to provide a thermal and/or physical barrier in respect of external fluids and/or physical objects or particles acting upon the inflation structure (11) in case the inflation structure (11) is inflated and inserted in a hollow section (3) of the wind turbine module (1). The invention is further directed to a wind turbine arrangement comprising such an inflatable component (10) and also to a servicing or installation method of a wind turbine module (1) by using the inflatable component (10).

## Description

### FIELD OF THE INVENTION

The invention relates to the field of servicing or installation of wind turbines.

### BACKGROUND OF THE INVENTION

When servicing a wind turbine, but also during initial installation or erection of a wind turbine, technician will execute work at components of wind turbines. These components may be wind turbine blades or other components of the wind turbine, like the tower or the hub. The components may be positioned on the ground or on a vessel decoupled from the wind turbine or may already be part of the erected wind turbine. As a further option the components, like a blade, may be decoupled temporarily from the erected wind turbine and may hang from a crane.

During the work, harsh weather conditions like rain, wind, snow, or extreme temperatures may be experienced, for example in at an offshore installation. As a result of the harsh weather conditions the temperature may not be accurate for the repair work process.

In other regional locations, the air may comprise a lot of particles like dust. Further on, the technician may execute work that also creates particles or debris while performing the work. Uncontrolled accumulation of such particles inside the serviced component is also unwanted.

### SUMMARY OF THE INVENTION

The present invention seeks to address these problems and mitigate related drawbacks.

This objective is achieved by the independent claims. The dependent claims describe advantageous developments and modifications of the invention.

In accordance with the invention there is provided an inflatable component usable during service and/or installation of a wind turbine module. The inflatable component comprises an inflation structure with an air tight shell and a sealable passage (13) in the inflation structure for ingress or discharge of air into or from the shell for inflating or deflating the inflation structure. The inflation structure is dimensioned to provide a thermal and/or physical barrier in respect of external fluids and/or physical objects or particles acting upon the inflation structure in case the inflation structure is inflated and inserted in a hollow section of the wind turbine module.

The wind turbine module may be a wind turbine blade but also other sections of a wind turbine, like a wind turbine tower, a wind turbine hub, or a wind turbine nacelle. Other examples could be a main shaft, a hub, a generator stator, a generator rotor or other wind turbine components having one or more substantially circular, oval or elliptical inner surfaces.

The inflatable component provides the advantage, for example if a wind turbine module like a blade is arranged horizontally on a jack-up vessel for service and repair, that rain, wind, or snow may be blocked to not affect the inside of the hollow blade, which may lead to the advantage that the right temperature which is needed for the repair of the blade can be maintained or configured.

Blade work outside the blade can be performed because the inflatable component is preventing undercooling from the inside.

If in another example the blade is arranged vertically hanging, for example, from a crane while being detached from the wind turbine, that dust or particles that may be created during the work, but also rain and snow, cannot enter the inside of the hollow blade beyond the inflatable component which acts as a seal and also as a collector for falling objects, dust or particles. Also lost tools that may be dropped during maintenance work inside the blade, which would cause damage of the blade, can be withheld at the inflatable component.

Overall a faster and safer environment for the work performed on the blade can be provided.

In the example of a blade as a wind turbine module, the inflatable component may keep the blade root area free and uncovered for work on the blade root and root terminals as it may be placed behind those. This is advantages compared to a cover which could alternatively be placed over the root end of the blade. Similarily for other wind turbine modules it may also be advantageous to be able to access one region of the module without obstruction but to have the inflatable component positioned inside the wind turbine module.

Further, during in-situ repair the wind turbine operator can be ensured that no technicians, parts, tools or dust are entering the blade or the wind turbine module.

In an embodiment the air tight shell may comprise an air tight inner shell and an outer shell surrounding the inner shell, the outer shell being of a material to protect against puncture of the inner shell. Thus a double shell structure or a bag in bag solution is provided.

The inner being the inflatable structure, i.e. a balloon, the outer to protect from any risk related to puncture of the inner inflatable structure,

In another exemplary embodiment the inflatable component may be sized and shaped to fit the hollow section of the wind turbine module such that, in case the inflation structure is inflated and inserted in a hollow section of the wind turbine module, a first surface structure of the inflatable component and a second surface structure of the hollow section of the wind turbine module are in fluid tight contact to limit or block a fluid leakage in between.

Thus the inflatable component provides sealing. For example to prevent wind entering the blade the inflatable component acting as a "balloon", will be blown up and fill the area and prevent wind, rain or snow to pass further into the blade, for example if the blade is arranged horizontally.

As the inflatable component being inflated it seals the inside of the wind turbine module, e.g. the blade, and it blocks, particularly if the blade is arranged vertically, loose parts, dust, etc. to proceed further down into the blade. The inserted inflatable component will result in that loose parts may lay at the side of the inflatable component so that these can be removed or collected afterwards in an easy manner.

The inflatable component may be a pre-formed component to match the inner shape of the hollow section.

In a further configuration the sealable passage may comprise a valve to control the fluid pressure inside the inflatable structure.

In another embodiment the air tight shell may be built of several air compartments. This may provide additional stability.

In a configuration with several compartments it may be provided with individual valves for each compartment and the compartments may not be fluidically connected to another.

Thus puncturing of one compartment would not cause collapse of overall inflatable component.

In an additional embodiment the inflatable component may further comprise a plurality of securing members via which the inflatable component is positioned and held in place in case the inflation structure is inflated and inserted in a hollow section of the wind turbine module. Hooks may be attached to the outer shell. Ropes or strings may be used to connect to the hooks and further to the wind turbine module.

It is also be advantageous that the inflatable component may be a portable component in case the inflation structure is deflated.

Furthermore, the inflatable component may be configured to provide a working platform for persons in case the inflation structure is inflated, inserted in a hollow section of the wind turbine module, and arranged horizontally. The inflatable component may be the primary working platform for service personnel or just as a safety plane in case the service personnel, who is primarily connected via strings, may drop.

In consequence the inflatable component may be used during an in-situ repair of the blade root, preventing tools and dust from entering the blade when hanging downwards (vertical), and at the same time act as a wind turbine inflatable platform as safety for the technician working in the blade or other wind turbine modules.

The invention is also directed to a wind turbine arrangement comprising a wind turbine module, preferably a wind turbine blade, a wind turbine tower, a wind turbine hub, a wind turbine nacelle, and an inflatable component as explained before. In such an arrangement the inflatable component is positioned and inflated inside a hollow section of the wind turbine module for service and/or installation of a wind turbine module.

Further on the invention is also directed to a servicing or installation method of a wind turbine module. The method comprises the following steps: (a) inserting an inflatable component into a hollow section of a wind turbine module, the inflatable component comprising an inflation structure with an air tight shell and a sealable passage in the inflation structure for ingress or discharge of air into or from the shell for inflating or deflating the inflation structure; and (b) inflating the inflatable structure such that it forms a thermal and/or physical barrier in respect of external fluids and/or physical objects or particles acting upon the inflation structure.

For work on a wind turbine module like a blade for which work is to be performed in horizontal orientation of the module, the method may also comprise these initial steps: decoupling the wind turbine module from a wind turbine installation; and orienting the wind turbine module in horizontal orientation. The step of inserting the inflatable component may then be performed while orienting the inflatable component vertically inside the hollow section, such that the inflatable component may provide the barrier for a horizontal movement of the external fluid or of the external physical objects or particles.

In case of service or installation work of a vertically arranged module, the additional method steps are similar:
first decoupling the wind turbine module from a wind turbine installation; and orienting the wind turbine module in vertical orientation. The step of inserting the inflatable component may then be performed while orienting the inflatable component horizontally inside the hollow section, such that the inflatable component may provide the barrier for a vertical movement of the external fluid or of the external physical objects or particles.

To secure the inflatable component, the inflatable component may be is connected by strings and/or wires to the wind turbine module. The inflatable component may stay connected throughout the servicing or installation work.

As a further option, particularly in case of harsh temperature conditions, the work may be performed while applying heat inside wind turbine module.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

Furthermore examples have been and will be disclosed in the following sections by reference to wind turbine blades. The invention is also applicable for any type of wind turbine module, e.g. tower or hub. Furthermore the general concept can be applied to rotating parts as well as stationary parts when the wind turbine is operating after the servicing or installation work has ended.

The aspects defined above and further aspects of the present invention are apparent from the examples of embodiment to be described hereinafter and are explained with reference to the examples of embodiment.

### BRIEF DESCRIPTION OF THE DRAWINGS

Embodiments of the invention will now be described, by way of example only, with reference to the accompanying drawings, of which:
- FIG. 1:: shows schematically a blade of a wind turbine in which an inventive inflatable component is placed;
- FIG. 2:: illustrates in a cross sectional view an inserted inflatable component in a hollow wind turbine module;
- FIG. 3:: illustrates in a cross sectional view a double shell structure of the inflatable component;
- FIG. 4:: illustrates in a cross sectional view a multi compartment structure of the inflatable component;
- FIG. 5:: shows schematically a three bladed wind turbine in which an inflatable component is inserted;
- FIG. 6:: shows schematically a semi inflated inflatable component.

The illustration in the drawing is schematical. It is noted that for similar or identical elements in different figures, the same reference signs will be used.

### DETAILED DESCRIPTION OF THE INVENTION

In horizontal position for blade work a tent and heaters are often used to controlling the outside temperature of the blade surface or other components where used, but the tent does not cover the complete blade and the wind can enter in the root end and cool down the blade from the inside avoiding correct temperature for repair work. This can be improved by using an inflatable component which can be inserted into the hollow section of the blade.

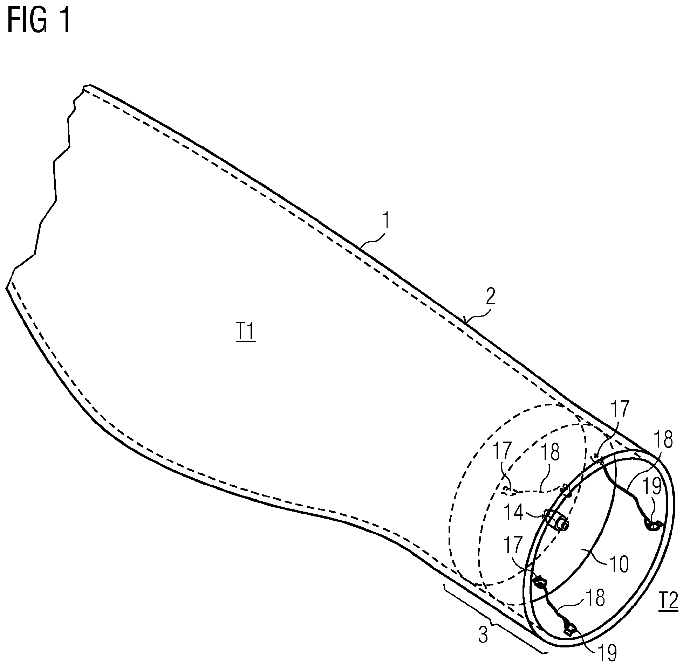

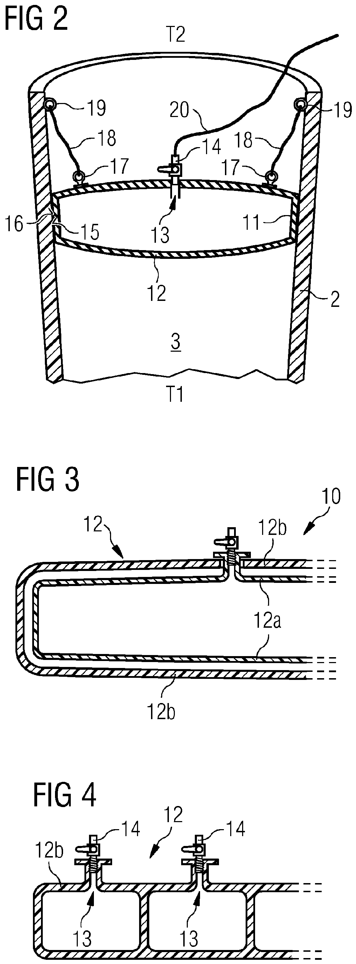

Referring now to FIG. 1 (with additional reference to FIG. 2), a blade 1 is shown as a wind turbine module which is detached from the wind turbine for service. The blade 1 is a hollow component with the blade wall 2. At a root end of the blade 1 a hollow root section 3 is located.

During service, as shown in FIG.1 and 2, an inflatable component 10 may be inserted into the hollow root section 3 of blade 1. The inflatable component 10 comprises further an inflation structure 11 with an air tight shell 12, which is illustrated in FIG.2. The inflation structure 11 can be inflated and later also deflated with air or another gaseous fluid via a sealable passage 13. A valve 14 may be positioned in or may be part of the sealable passage 13 so that the inflation structure 11 can be inflated or deflated in a controlled manner. The valve 14 may be located at the centre of the inflatable component 10 or at any other position at a top surface of the inflatable component 10.

The valve 14 may be operated manually, e.g. by the help of an attached string or wire 20 or similar means attached to an open/close handle of the valve 14.

The inflation structure 11 is dimensioned to provide a thermal and/or physical barrier in respect of external fluids and/or physical objects or particles acting upon the inflation structure 11 in case the inflation structure 11 is inflated and inserted in a hollow section 3 of the wind turbine module 1. Thus a temperature T1 inside the blade 1 may be different to a temperature T2 outside of the blade 1.

As particularly highlighted in FIG.2, but also shown in FIG.1, the inflatable component 10 is sized and shaped to fit the hollow section 3 of the blade 1 such that, in case the inflation structure 11 is inflated and inserted in the hollow root section 3 of the wind turbine module 1, a first surface structure 15 of the inflatable component 10 and a second surface structure 16 of the hollow section 3 of the wind turbine module 1 are in fluid tight contact to limit or block a fluid leakage in between. By this the inflatable component 10 acts as a temperature barrier. Furthermore this provides stability of the inflatable component 10. Wind, air, snow, or dust is also properly blocked from entering the hollow inside of the blade 1.

Further it is shown that the inflatable component 10 comprises a plurality of securing members 17 via which the inflatable component 10 is positioned and held in place in case the inflation structure 11 is inflated and inserted in a hollow root section 3 of the blade 1. The securing members 17 may be straps to which cables, ropes, or wires 18 can be connected. The other ends of these cables, ropes, or wires 18 may be fasted to hooks 19 and connected to the blade 1 or another solid structure, like a vessel on which the blade 1 is positioned.

By this fastening it can be guaranteed that the inflatable component 10 remains in position, even if the blade 1 is positioned vertically.

As a variant of FIG.2, FIG.3 illustrates a double shell structure of the inflatable component 10. The air tight shell 12 comprises an air tight inner shell 12a and an outer shell 12b surrounding the inner shell 12a, the outer shell 12b being of a material to protect against puncture of the inner shell 12a. The double shell structure provides additional protection in respect of puncturing the air filled compartment.

FIG.4 illustrates in a cross sectional view a multi compartment structure of the inflatable component 10. The air tight shell 12 is built of several air compartments as illustrated via air tight inner shells 12a1, 12a2, 12a3, each having individually a sealable passage 13 and a valve 14. All air tight inner shells are surrounded by a joint outer shell 12b.

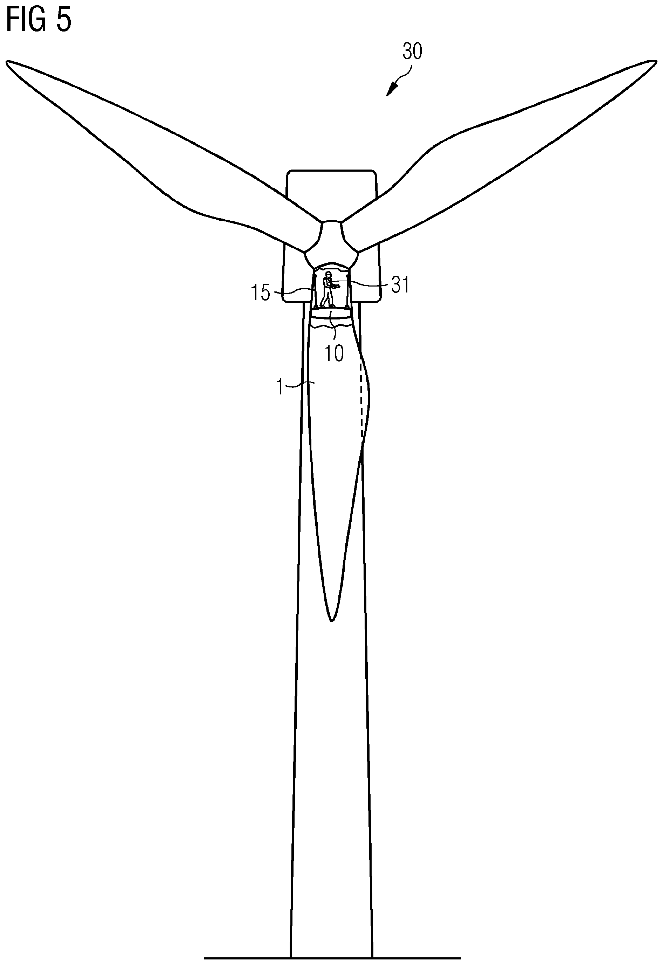

FIG.5 shows schematically a three bladed wind turbine 30 in which an inflatable component 10 is inserted for service work. The solution may also work for wind turbines with a different number of blades.

In the illustration one blade 1 is placed in a substantially vertical position where the service technician 31 may work inside the blade 1. The inflatable component 10 has been inserted, secured via cables, ropes, or wires 18, and inflated. The service technician 31 may use the inflatable component 10 as a working platform or the inflatable component 10 may only be placed inside the blade 1 below the service technician preventing dust and tools from entering the blade 1 below the service technician 31.

FIG.5 shows an example in which the blade 1 as to be serviced wind turbine module remains connected and installed. Alternatively the blade 1 could be detached and hanging vertically from a crane or similar solution.

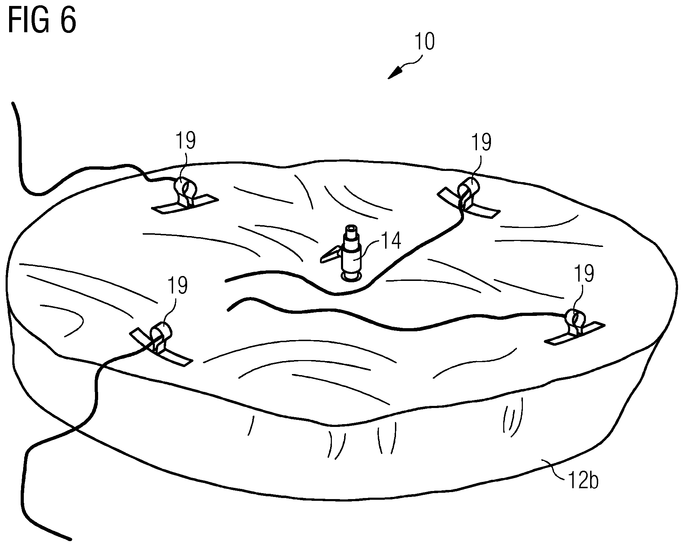

FIG. 6 shows schematically a semi inflated inflatable component 10 which is not yet installed in the wind turbine module or in the blade 1. The valve 14 can be seen and the outer shell 12b. Also hooks 19 are indicated which may be built from a soft fabric.

The valve 14 may arranged to have a hose installed. Additionally or alternatively, the valve 14 may be designed as pressure valve to secure pressure.

The discussed solution according to the figures tackles the following technical issues, which are explained for blades but apply also to other wind turbine modules in a similar fashion:
1) During blade repair work performed on a jack-up vessel onto which blades may be arranged horizontally or any work with the blade in horizontal position, there is the need to control the temperature inside the blade to be able to perform the work in controlled environment. Potential risk from wind, water, snow, etc. could cause problem to the repair, service, or installation process. This is solved via the inflatable component, as this element will be blown up and by this it will fill the open area inside the blade. Thus it prevents wind, rain, etc. to pass further into the blade. A heating solution can optionally be installed inside to add speed to the process of getting right temperature to repair blade.
   Another component of a wind turbine with substantially a horizontal orientation would be the nacelle or the hub, into which the inflatable component could be inserted in the same way.
2) The discussed solution prevents further any parts from dropping into the blade during a process for work when the blade being oriented vertically. It prevents any loose parts as well as dust created during previous operation of the wind turbine to enter the blade, which would otherwise create the potential risk of stopping drain hole or being stuck in the blade creating damages when the wind turbine generator is being restarted. This is solved as the inflatable component, when being inflated, seals off around the inside of the blade. It protects that any parts or dusts, etc. could proceed further down into the blade. This is possible as these parts will lay at the side of the inflatable component so that these can be removed or collected easily.
   Horizontal operation as just explained may also be applied for work inside the tower.
3) The inflatable component additionally operates as a safety device for the technicians when working inside the blade when in vertical position. When being attached to secured points the inflatable component can work as a floor for the technicians to step on or just as a back-up when hanging in a rope system.

Without explicit illustration further advantages and configurations will be explained in the following.

The inflatable component consists of an inflatable system being able to reliably stop wind and heavy rain inside a blade being worked on at ground level, and/or a solution to stop anything from being inserted by fall or drop into the blade during vertical work on the blade, this being both related to tools and manpower as the inflatable component in this solution being attached to approved point in hub and/or nacelle and preferably being able to hold the load of any components etc. with the load from 0 to 136 kg or more, e.g. 200 kg or 500 kg or more, depending on the inflatable platform material, thickness and the inflatable air pressure as well as anchor points etc. The inflatable component acting as a stopper can be used as a floor in combination with rope systems which are used by the technicians as the primary solution to be secured.

Time for inflate the inflation structure may preferably being less than 10 minutes depending on equipment available, so cost and timewise it would be able to include the use of the inflatable component in existing working process.

## Claims

1. Inflatable component (10) usable during service and/or installation of a wind turbine module (1),
comprising
- an inflation structure (11) with an air tight shell (12) and
- a sealable passage (13) in the inflation structure (11) for ingress or discharge of air into or from the air tight shell (11) for inflating or deflating the inflation structure (11),
wherein
the inflation structure (11) is dimensioned to provide a thermal and/or physical barrier in respect of external fluids and/or physical objects or particles acting upon the inflation structure (11) in case the inflation structure (11) is inflated and inserted in a hollow section (3) of the wind turbine module (1).

2. Inflatable component (10) according to claim 1,
**characterised in that**
the air tight shell (12) comprises an air tight inner shell (12a) and an outer shell (12b) surrounding the inner shell (12a), the outer shell (12b) being of a material to protect against puncture of the inner shell (12a).

3. Inflatable component (10) according to claim 1 or 2,
**characterised in that**
the inflatable component (10) is sized and shaped to fit the hollow section (3) of the wind turbine module (1) such that, in case the inflation structure (11) is inflated and inserted in a hollow section (3) of the wind turbine module (1), a first surface structure (15) of the inflatable component (10) and a second surface structure (16) of the hollow section (3) of the wind turbine module (1) are in fluid tight contact to limit or block a fluid leakage in between.

4. Inflatable component (10) according to one of the preceding claims,
**characterised in that**
the air tight shell (12) is built of several air compartments.

5. Inflatable component (10) according to one of the preceding claims,
**characterised in that**
the inflatable component (10) further comprises a plurality of securing members (17) via which the inflatable component (10) is positioned and held in place in case the inflation structure (11) is inflated and inserted in a hollow section (3) of the wind turbine module (1).

6. Inflatable component (10) according to one of the preceding claims,
**characterised in that**
the sealable passage (13) in the inflation structure (11) is arranged as one or several valves (14).

7. Inflatable component (10) according to one of the preceding claims,
**characterised in that**
the inflatable component (10) is a portable component in case the inflation structure (11) is deflated.

8. Inflatable component (10) according to one of the preceding claims,
**characterised in that**
the inflatable component (10) is a configured to provide a working platform for persons in case the inflation structure (11) is inflated, inserted in a hollow section (3) of the wind turbine module (1), and arranged horizontally.

9. Wind turbine arrangement (30)
comprising
a wind turbine module (1), preferably a wind turbine blade, a wind turbine tower, a wind turbine hub, a wind turbine nacelle, and
an inflatable component (10) according to one of the preceding claims,
wherein the inflatable component (10) is positioned and inflated inside a hollow section (3) of the wind turbine module (1) for service and/or installation of a wind turbine module (1).

10. Servicing or installation method of a wind turbine module (1),
comprising the steps of:
(a) inserting an inflatable component (10) into a hollow section (3) of a wind turbine module (1), the inflatable component (10) comprising an inflation structure (11) with an air tight shell (12) and a sealable passage (13) in the inflation structure (11) for ingress or discharge of air into or from the air tight shell (12) for inflating or deflating the inflation structure (11); and
(b) inflating the inflatable structure such that it forms a thermal and/or physical barrier in respect of external fluids and/or physical objects or particles acting upon the inflation structure (11).

11. Servicing or installation method according to claim 10, comprising, before step (a), the further steps of:
(a1) decoupling the wind turbine module (1) from a wind turbine installation; and
(a2) orienting the wind turbine module (1) in horizontal orientation;
wherein step (a) is performed while orienting the inflatable component (10) vertically inside the hollow section (3), such that the inflatable component (10) provides the barrier for a horizontal movement of the external fluid or of the external physical objects or particles.

12. Servicing or installation method according to claim 10, comprising, before step (a), the further steps of:
(a1) decoupling the wind turbine module (1) from a wind turbine installation; and
(a2) orienting the wind turbine module (1) in vertical orientation;
wherein step (a) is performed while orienting the inflatable component (10) horizontally inside the hollow section (3), such that the inflatable component (10) provides the barrier for a vertical movement of the external fluid or of the external physical objects or particles.

13. Servicing or installation method according to any one of the claims 10 to 12,
**characterised in that**
during step (a) the inflatable component (10) is connected by strings and/or wires to the wind turbine module (1) .

14. Servicing or installation method according to any one of the claims 10 to 13,
comprising the further step of:
(c) applying heat inside wind turbine module (1).
